(19) Europäisches Patentamt
European Patent Office
Office européen des brevets

(11) **EP 3 882 312 A1**

(12) **EUROPEAN PATENT APPLICATION**
published in accordance with Art. 153(4) EPC

(43) Date of publication:
**22.09.2021 Bulletin 2021/38**

(21) Application number: **19883992.0**

(22) Date of filing: **30.10.2019**

(51) Int Cl.:
**C08L 69/00** (2006.01)   **C08L 23/08** (2006.01)
**C08L 31/04** (2006.01)   **C08L 33/02** (2006.01)
**C08L 33/04** (2006.01)   **C08L 25/08** (2006.01)
**C08L 53/02** (2006.01)

(86) International application number:
**PCT/CN2019/114377**

(87) International publication number:
**WO 2020/098497 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2018 CN 201811348965**

(71) Applicant: **KINGFA SCI. & TECH. CO., LTD.**
**Guangzhou, Guangdong 510663 (CN)**

(72) Inventors:
• **YANG, Yan**
**Guangzhou Guangdong 510663 (CN)**
• **LI, Mingkun**
**Guangzhou Guangdong 510663 (CN)**

• **HUANG, Xianbo**
**Guangzhou Guangdong 510663 (CN)**
• **YE, Nanbiao**
**Guangzhou Guangdong 510663 (CN)**
• **TONG, Wei**
**Guangzhou Guangdong 510663 (CN)**
• **DONG, Xiangmao**
**Guangzhou Guangdong 510663 (CN)**
• **AI, Junwei**
**Guangzhou Guangdong 510663 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **POLYCARBONATE ALLOY AND PREPARATION METHOD THEREOF**

(57) The present invention discloses a polycarbonate alloy, including the following components in parts by weight: 80 parts of a polycarbonate; and 5 parts to 30 parts of an ethylene copolymer. The present invention improves the disadvantages of poor molding processability of the polycarbonate and easy stress cracking of its articles, so that the polycarbonate alloy of the present invention has the advantages of good processability and resistance to stress cracking.

**Description**

**TECHNICAL FIELD**

The present invention relates to the technical field of polymer materials, and particularly relates to a polycarbonate alloy and a preparation method thereof.

**BACKGROUND**

Polycarbonate (PC) is an engineering plastic with excellent performances, having an excellent mechanical property and an excellent dimensional stability, and a thermal stability, a weather resistance, a creep resistance, and a heat resistance are good. However, due to the presence of a rigid group in the PC molecular chain, a melt viscosity thereof is high and a molding processability is poor. In addition, due to high rigidity of the PC molecular chain and poor molecular chain mobility, and thus recovery from reversible high-elastic deformation that occurs is poor, which is easy to generate residual internal stress, leading to easy stress cracking of molded articles thereof (The stress cracking is that a solvent penetrates between molecules of an alloy, thereby destroying a structure between the molecules, affecting a molecular force, causing fracture of a large number of the molecules, and finally leading to material cracking, where a chemical reagent does not directly cause a chemical action or a molecular degradation, and in fact, it is the chemical reagent that penetrates into molecular structure and causes damage to the inner molecular force of the polymer chain, thereby accelerating molecular fracture.).

**SUMMARY**

An objective of the present invention is to overcome the above technical defects, and to provide a polycarbonate alloy, having the advantages of good processability and a resistance to stress cracking.

Another objective of the present invention is to provide a preparation method of the above-mentioned polycarbonate alloy.

The present invention is realized by the following technical solution.

A polycarbonate alloy includes the following components in parts by weight:

| | |
|---|---|
| a polycarbonate | 80 parts; and |
| an ethylene copolymer | 5 parts to 30 parts. |

Preferably, the polycarbonate alloy includes the following components in parts by weight:

| | |
|---|---|
| the polycarbonate | 80 parts; and |
| the ethylene copolymer | 12 parts to 23 parts. |

The ethylene copolymer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer. The ethylene copolymer of acrylic acid is selected from at least one of an ethylene-methacrylic acid copolymer, an ethylene-ethyl acrylate copolymer, and an ethylene-butyl acrylate copolymer.

Preferably, the ethylene copolymer is selected from the ethylene copolymer of acrylic acid.

Another option is that the ethylene copolymer is selected from an ethylene copolymer containing a reactive active group, wherein the ethylene copolymer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer, the reactive active group is at least one of a maleic anhydride group and an epoxy group, and a grafting ratio of the reactive active group is 0.1% to 15%.

Preferably, the ethylene copolymer in the ethylene copolymer containing the reactive active group is selected from the ethylene copolymer of acrylic acid.

The polycarbonate is selected from an aromatic polycarbonate, an aliphatic polycarbonate, and an aromatic-aliphatic polycarbonate. Preferably, the polycarbonate has a weight average molecular weight of 18,000 to 28,000.

In parts by weight, 0 part to 10 parts of a processing aid and/or an additive are further included.

A preparation method of the above-mentioned polycarbonate alloy includes the following steps: mixing the polycarbonate, the ethylene copolymer, and the processing aid and/or the additive evenly according to a ratio in a high-speed mixer; then adding into a twin-screw extruder, melt mixing at a temperature of 220°C to 240°C, and then granulating, cooling and drying to obtain the polycarbonate alloy.

The present invention has the following beneficial effects.

According to the present invention, by adding a certain amount of the ethylene copolymer to the polycarbonate, processability (evaluated jointly by a processing molding cycle and a processing moldability (R angle)) and a stress cracking performance of the polycarbonate are improved. Further, in the present invention the ethylene copolymer of acrylic acid is preferred, thus further improving the processability of the polycarbonate alloy. In summary, the polycarbonate alloy of the present invention has the advantages of good processability and a resistance to stress cracking.

## DETAILED DESCRIPTION

The present invention will be further illustrated below by specific implementations, the following embodiments are preferred implementations of the invention, but the implementations of the present invention are not limited by the following embodiments.

Raw materials of Embodiments and Comparative Examples are commercially available, specifically:

EMA: ethylene-methacrylic acid copolymer;
EEA: ethylene-ethyl acrylate copolymer;
EMA-g-GMA: ethylene-methacrylic acid graft epoxy group (GMA is an epoxy group);
EVA: ethylene-vinyl acetate copolymer;
SEBS: styrene-ethylene-butadiene-styrene copolymer;
PP-g-GMA: polypropylene graft epoxy group;
polycarbonate A: an aromatic polycarbonate with a weight average molecular weight being 28,000;
polycarbonate B: an aliphatic polycarbonate with a weight average molecular weight being 18,000;
polycarbonate C: an aromatic polycarbonate with a weight average molecular weight being 8,000;
polycarbonate D: an aromatic polycarbonate with a weight average molecular weight being 30,000;
anti-aging agent: anti-oxidant: anti-ultraviolet aging agent =1:1.

A preparation method of a polycarbonate alloy in Embodiments and Comparative Examples: a polycarbonate and an ethylene copolymer were mixed venly according to a ratio in a high-speed mixer; then added into a twin-screw extruder, melt mixed at a temperature of 220°C to 240°C, and then granulated, cooled and dried to obtain the polycarbonate alloy.
Each test method:

(1) Internal stress test: a sample is soaked in 95% glacial acetic acid for 3 minutes. If there is no swelling and no cracking, it means that a stress cracking resistance is good.
(2) Processing molding cycle:

$$T=(0.013x+3.6)+(0.0085*m+0.5)+(0.6D^2+0.3D)+D^2/(\alpha\times\pi^2)\ln[8/\pi^2\times(tc-tm)/(tx-tm)]$$

x: machine clamping force (tons)
m: total product weight (grams)
D: maximum product wall thickness (mm)
$\alpha$: thermal diffusivity of rubber material $mm^2sec^{-1}$
tc: melting temperature (°C)
tm: mold temperature (°C)
tx: heat deflection temperature (°C);

(3) Processing moldability (R angle): for an injection molded product, by measuring an R angle of product edge after molding, if the closer the R angle of the product edge after the molding is to a designed R angle, the better the processing moldability is; when the R angle of the product is designed as 10mm, when a pattern satisfies a range: $10 \leq R$ angle$\leq 13$mm, it is considered that the processing moldability is good, and when the R angle$>13$mm, it is considered that the processing moldability is poor.

Table 1: Each ingredient and ratio (in parts by weight) and each performance test results of Embodiments and Comparative Examples

| | | Embodiment 1 | Embodiment 2 | Embodiment 3 | Embodiment 4 |
|---|---|---|---|---|---|
| Polycarbonate A, parts | | 80 | 80 | 80 | 80 |
| Polycarbonate B, parts | | - | - | - | - |
| Polycarbonate C, parts | | - | - | - | - |
| Polycarbonate D, parts | | - | - | - | - |
| Ethylene copolymer | Species of reactive active group | - | - | - | - |
| | Content of reactive active group, % | - | - | - | - |
| | Ethylene copolymer | EMA | EMA | EMA | EMA |
| | Amount, parts | 5 | 12 | 15 | 23 |
| Anti-aging agent | | 0.5 | 0.5 | 0.5 | 0.5 |
| Processing molding cycle, s | | 32 | 30 | 28 | 28 |
| R angle, mm | | 12 | 10.5 | 10 | 10 |

| Internal stress test | no cracking |
|---|---|

Continued to Table 1:

| | | Embodiment 5 | Embodiment 6 | Embodiment 7 | Embodiment 8 |
|---|---|---|---|---|---|
| Polycarbonate A, parts | | 80 | 80 | 80 | 80 |
| Polycarbonate B, parts | | - | - | - | - |
| Polycarbonate C, parts | | - | - | - | - |
| Polycarbonate D, parts | | - | - | - | - |
| Ethylene copolymer | Species of reactive active group | - | - | - | - |
| | Content of reactive active group, % | - | - | - | - |
| | Ethylene copolymer | EMA | EEA | EVA | SEBS |
| | Amount, parts | 30 | 15 | 15 | 15 |
| Anti-aging agent | | 0.5 | 0.5 | 0.5 | 0.5 |
| Processing molding cycle, s | | 28 | 29 | 30 | 30 |
| R angle, mm | | 10 | 10 | 12 | 12 |
| Internal stress test | | no cracking | | | |

Continued to Table 1:

| | Embodiment 9 | Embodiment 10 | Embodiment 11 | Embodiment 12 |
|---|---|---|---|---|
| Polycarbonate A, parts | - | - | - | 80 |
| Polycarbonate B, parts | 80 | - | - | - |

| | | | | | |
|---|---|---|---|---|---|
| Polycarbonate C, parts | | - | 80 | - | - |
| Polycarbonate D, parts | | - | - | 80 | - |
| Ethylene copolymer | Species of reactive active group | - | - | - | GMA |
| | Content of reactive active group, % | - | - | - | 0.1 |
| | Ethylene copolymer | EMA | EMA | EMA | EMA |
| | Amount, parts | 15 | 15 | 15 | 15 |
| Anti-aging agent | | 0.5 | 0.5 | 0.5 | 0.5 |
| Processing molding cycle, s | | 29 | 35 | 36 | 33 |
| R angle, mm | | 10 | 13 | 13 | 12 |
| Internal stress test | | no cracking | | | |

Continued to Table 1:

| | | Embodiment 13 | Embodiment 14 | Embodiment 15 | Embodiment 16 |
|---|---|---|---|---|---|
| Polycarbonate A, parts | | 80 | 80 | 80 | 80 |
| Polycarbonate B, parts | | - | - | - | - |
| Polycarbonate C, parts | | - | - | - | - |
| Polycarbonate D, parts | | - | - | - | - |
| Ethylene copolymer | Species of reactive active group | GMA | GMA | GMA | GMA |
| | Content of reactive | 3 | 10 | 15 | 3 |

| | active group, % | | | | |
|---|---|---|---|---|---|
| | Ethylene copolymer | EMA | EMA | EMA | EVA |
| | Amount, parts | 15 | 15 | 15 | 15 |
| Anti-aging agent | | 0.5 | 0.5 | 0.5 | 0.5 |
| Processing molding cycle, s | | 32 | 30 | 30 | 34 |
| R angle, mm | | 12 | 11.5 | 11.5 | 13 |
| Internal stress test | | no cracking | | | |

Continued to Table 1:

| | | Comparative Example 1 | Comparative Example 2 |
|---|---|---|---|
| Polycarbonate A, parts | | 80 | 80 |
| Polycarbonate B, parts | | - | - |
| Polycarbonate C, parts | | - | - |
| Polycarbonate D, parts | | - | - |
| Ethylene copolymer | Species of reactive active group | - | - |
| | Content of reactive active group, % | - | - |
| | Ethylene copolymer | - | - |
| | Amount, parts | - | - |
| PP-g-GMA | | - | 15 |
| Anti-aging agent | | 0.5 | 0.5 |
| Processing molding cycle, s | | 48 | 30 |
| R angle, mm | | 18 | 20 |

| Internal stress test | cracking | swelling |
| --- | --- | --- |

It can be seen from Embodiments 1 to 5 that as an increase of the amount of the ethylene copolymer, processability is improved. In general, when the amount of the ethylene copolymer is 12 parts to 23 parts, an overall performance is relatively good and an industrial application value is relatively high.

It can be seen from Embodiments 3, 6 to 8 that the processability of the polycarbonate alloy added with the ethylene copolymer of acrylic acid is relatively good.

It can be seen from Embodiments 3, 9 to 11 that when the weight average molecular weight of the polycarbonate is within the range of 18,000 to 28,000, a product performance is better.

It can be seen from Comparative Example 1 that without adding the ethylene copolymer, its processability and stress cracking resistance are poor.

It can be seen from Comparative Example 2 that an addition of a traditional compatibilizer PP-g-GMA has a small improvement on the processability and the stress cracking resistance, and even the R angle after the molding is greater than that of Comparative Example 1.

**Claims**

1. A polycarbonate alloy, comprising the following components in parts by weight:

   a polycarbonate     80 parts; and
   an ethylene copolymer     5 parts to 30 parts.

2. The polycarbonate alloy according to claim 1, comprising the following components in parts by weight:

   the polycarbonate     80 parts; and
   the ethylene copolymer     12 parts to 23 parts.

3. The polycarbonate alloy according to claim 1 or 2, wherein the ethylene copolymer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer; and the ethylene copolymer of acrylic acid is selected from at least one of an ethylene-methacrylic acid copolymer, an ethylene-ethyl acrylate copolymer, and an ethylene-butyl acrylate copolymer.

4. The polycarbonate alloy according to claim 3, wherein the ethylene copolymer is selected from the ethylene copolymer of acrylic acid.

5. The polycarbonate alloy according to claim 1 or 2, wherein the ethylene copolymer is selected from an ethylene copolymer containing a reactive active group, wherein the ethylene copolymer is selected from at least one of an ethylene copolymer of acrylic acid, an ethylene-vinyl acetate copolymer, a styrene-butadiene-styrene copolymer, a styrene-ethylene-butadiene-styrene copolymer, and a styrene-ethylene-propylene-styrene copolymer, the reactive active group is at least one of a maleic anhydride group and an epoxy group, and a grafting ratio of the reactive active group is 0.1% to 15%; and the ethylene copolymer of acrylic acid is selected from at least one of an ethylene-methacrylic acid copolymer, an ethylene-ethyl acrylate copolymer, and an ethylene-butyl acrylate copolymer.

6. The polycarbonate alloy according to claim 5, wherein the ethylene copolymer in the ethylene copolymer containing the reactive active group is selected from the ethylene copolymer of acrylic acid.

7. The polycarbonate alloy according to claim 1 or 2, wherein the polycarbonate is selected from an aromatic polycarbonate, an aliphatic polycarbonate, and an aromatic-aliphatic polycarbonate; and the polycarbonate has a weight average molecular weight of 18,000 to 28,000.

8. The polycarbonate alloy according to claim 1 or 2, wherein in parts by weight, 0 part to 10 parts of a processing aid and/or an additive are further comprised.

9. A preparation method of the polycarbonate alloy of claim 8, comprising the following steps: mixing the polycarbonate, the ethylene copolymer, the processing aid and/or the additive evenly according to a ratio in a high-speed mixer; then adding into a twin-screw extruder, melt mixing at a temperature of 220°C to 240°C, and then granulating, cooling and drying to obtain the polycarbonate alloy.

## INTERNATIONAL SEARCH REPORT

| International application No. |
| --- |
| **PCT/CN2019/114377** |

**A. CLASSIFICATION OF SUBJECT MATTER**

C08L 69/00(2006.01)i; C08L 23/08(2006.01)i; C08L 31/04(2006.01)i; C08L 33/02(2006.01)i; C08L 33/04(2006.01)i; C08L 25/08(2006.01)i; C08L 53/02(2006.01)i

According to International Patent Classification (IPC) or to both national classification and IPC

**B. FIELDS SEARCHED**

Minimum documentation searched (classification system followed by classification symbols)

C08L

Documentation searched other than minimum documentation to the extent that such documents are included in the fields searched

Electronic data base consulted during the international search (name of data base and, where practicable, search terms used)

CJFD; DWPI SIPOABS; CNABS; CNTXT: 应力, 开裂, 加工, 乙烯, 丙烯酸, 丙烯酸乙酯, 丙烯酸丁酯, 乙酸乙烯, 醋酸乙烯, 相容, compatible, consistent, acrylate, acrylic, vinyl acetate, stress, crack, cracking, process

**C. DOCUMENTS CONSIDERED TO BE RELEVANT**

| Category* | Citation of document, with indication, where appropriate, of the relevant passages | Relevant to claim No. |
| --- | --- | --- |
| PX | CN 109438954 A (KINGFA SCIENTIFIC AND TECHNOLOGICAL CO., LTD.) 08 March 2019 (2019-03-08) claims 1-9 | 1-9 |
| X | CN 104629285 A (YIN, Peihua) 20 May 2015 (2015-05-20) description, paragraphs 4-10 | 1-9 |
| X | CN 103087494 A (SHENZHEN BEAUTY STAR CO., LTD. et al.) 08 May 2013 (2013-05-08) description, paragraphs 6-14 | 1-9 |
| X | US 4481331 A (GEN ELECTRIC) 06 November 1984 (1984-11-06) description, columns 2, 5, and 6 | 1-9 |
| X | US 4145373 A (MOBAY CHEMICAL CORP) 20 March 1979 (1979-03-20) claims 1-4 | 1-9 |
| X | CN 104725815 A (QINGDAO WANLI TECHNOLOGY CO., LTD.) 24 June 2015 (2015-06-24) description, paragraphs 4-15 | 1-9 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 January 2020** | **13 January 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2019/114377** |

**C.     DOCUMENTS CONSIDERED TO BE RELEVANT**

| Category* | Citation of document, with indication, where appropriate, of the relevant passages | Relevant to claim No. |
| --- | --- | --- |
| X | CN 104672831 A (QINGDAO JIAYIYANG INDUSTRY & TRADE CO., LTD.) 03 June 2015 (2015-06-03)<br>        description, paragraphs 4-11 | 1-9 |
| X | CN 104672839 A (QINGDAO JIAYIYANG INDUSTRY & TRADE CO., LTD.) 03 June 2015 (2015-06-03)<br>        description, paragraphs 4-11 | 1-9 |
| X | CN 107011645 A (GUANGDONG ALDEX NEW MATERIAL CO., LTD.) 04 August 2017 (2017-08-04)<br>        description, paragraphs 4-14 | 1-9 |
| X | CN 104629300 A (KINGFA SCIENTIFIC AND TECHNOLOGICAL CO., LTD.) 20 May 2015 (2015-05-20)<br>        description, paragraphs 6-23 | 1-9 |

Form PCT/ISA/210 (second sheet) (January 2015)

**INTERNATIONAL SEARCH REPORT**
**Information on patent family members**

International application No.

**PCT/CN2019/114377**

| Patent document cited in search report | | | Publication date (day/month/year) | Patent family member(s) | | | Publication date (day/month/year) |
|---|---|---|---|---|---|---|---|
| CN | 109438954 | A | 08 March 2019 | None | | | |
| CN | 104629285 | A | 20 May 2015 | None | | | |
| CN | 103087494 | A | 08 May 2013 | CN | 103087494 | B | 31 December 2014 |
| US | 4481331 | A | 06 November 1984 | JP | S59230050 | A | 24 December 1984 |
| | | | | EP | 0119533 | B1 | 03 December 1986 |
| | | | | AU | 547506 | B2 | 24 October 1985 |
| | | | | BR | MU8401381 | A | 06 November 1984 |
| | | | | BR | PI8401381 | A | 06 November 1984 |
| | | | | DE | 3461540 | D1 | 15 January 1987 |
| | | | | BR | 8401381 | A | 06 November 1984 |
| | | | | AU | 2601384 | A | 27 September 1984 |
| | | | | CA | 1211588 | A | 16 September 1986 |
| | | | | JP | S6242943 | B2 | 10 September 1987 |
| | | | | EP | 0119533 | A1 | 26 September 1984 |
| US | 4145373 | A | 20 March 1979 | FR | 2340349 | B1 | 18 November 1983 |
| | | | | JP | S6111974 | B2 | 05 April 1986 |
| | | | | JP | S5296656 | A | 13 August 1977 |
| | | | | DE | 2704683 | A1 | 11 August 1977 |
| | | | | IT | 1081472 | B | 21 May 1985 |
| | | | | CA | 1080886 | A | 01 July 1980 |
| | | | | FR | 2340349 | A1 | 02 September 1977 |
| | | | | GB | 1508754 | A | 26 April 1978 |
| CN | 104725815 | A | 24 June 2015 | None | | | |
| CN | 104672831 | A | 03 June 2015 | None | | | |
| CN | 104672839 | A | 03 June 2015 | None | | | |
| CN | 107011645 | A | 04 August 2017 | CN | 107011645 | B | 24 May 2019 |
| CN | 104629300 | A | 20 May 2015 | CN | 104629300 | B | 17 August 2016 |

Form PCT/ISA/210 (patent family annex) (January 2015)